Europäisches Patentamt

**European Patent Office**

**Office européen des brevets**

(19)

(11) Publication number: **0 088 519**
A1

# EUROPEAN PATENT APPLICATION

(12)

(21) Application number: **83300619.0**

(51) Int. Cl.³: **G 02 B 5/16**

(22) Date of filing: **08.02.83**

(30) Priority: **16.02.82 GB 8204554**

(43) Date of publication of application: **14.09.83**
**Bulletin 83/37**

(84) Designated Contracting States: **DE FR GB**

(71) Applicant: **STANDARD TELEPHONES AND CABLES PUBLIC LIMITED COMPANY, 190 Strand, London, WC2R 1DU (GB)**

(84) Designated Contracting States: **GB**

(71) Applicant: **International Standard Electric Corporation, 320 Park Avenue, New York New York 10022 (US)**

(84) Designated Contracting States: **DE FR**

(72) Inventor: **Parfree, Colin Stanley, 50 Landguard Road, Shirley Southampton SO1 5DN (GB)**
Inventor: **Worthington, Peter, 356 Spring Road, Sholing Southampton Herts (GB)**
Inventor: **Lawrence, John Robert, 24 Parkway Gardens, Chandlers Ford Hants (GB)**

(74) Representative: **Dennis, Mark Charles, STC Patent Department Edinburgh Way, Harlow Essex CM20 2SH (GB)**

(54) **Optical fibre cables.**

(57) An optical fibre submarine cable comprises an optical fibre package loosely housed in a water-blocked aluminium split tube. First and second layers of tensile strength elements are applied with opposite lays around the tube, the outer layer comprising between twenty five and forty elements and the inner layer comprising between ten and twenty elements of larger size than the outer layer, such that a crush resistant tortionally balanced core results.

EP 0 088 519 A1

## OPTICAL FIBRE CABLES

This invention relates to optical fibre cables, particularly but not exclusively to such cables for use in submerged telecommunication systems.

Various designs of optical fibre cable for submarine systems have been proposed.  US Patent 4 239 336 shows an optical fibre cable which includes a centrally located tubular conductor which is provided with an external sheath and within which there are located one or more optical fibres.  In one embodiment the tubular electrical conductor is overlaid by a cylindrical strain member which is itself overlaid with a dielectric sheath.

Another US Patent 4 156 104 (Richard C.Mondello) shows a submarine cable which has a composite inner conductor for accommodating a system of optical fibres. The cable strength members include a central elongated filament and a number of layers of stranded steel wires separated from the central filament by an annular insulating core member, in which the optical fibres are embedded.  A metallic tubular jacket surrounds the stranded steel layers to provide both a DC path for powering optical repeaters and also a hermetic moisture barrier for the fibres.

The problem of preventing moisture ingress to the fibres in a submarine cable in a cost-effective and reliable manner provides some difficulty particularly in combination with the other requirements, in particular that of preventing radial stresses on the fibres and undue longitudinal tensile stresses. The present invention tackles both these problems.

According to the present invention there is provided an optical fibre cable comprising at least one optical fibre housed within a tubular metallic core member, at least two layers of tensile strength elements laid up around the core and forming the tensile strength member of the cable the two layers of strength elements having opposite directions of lay and being tortionally balanced.

According to a further aspect of the present invention there is provided an optical fibre cable comprising at least one optical fibre loosely housed within a tubular metallic core member, at least two layers of tensile strength elements laid up around the core and forming the tensile strength member of the cable, and an hermetic sealing layer between the core and the strength member to prevent moisture ingress to the core.

According to another aspect of the present invention there is provided a method of making an optical fibre cable comprising loosely housing at least one optical fibre within a tubular conductor, applying a first layer of tensile strength elements around the tube with a first direction of lay, applying a second layer of tensile strength elements around the first layer with an opposite direction of lay and of a size which is smaller than the first layer such that the two layers are tortionally balanced and provide with the tubular conductor a crush-resistant hollow core.

In order that the invention can be clearly understood reference will now be made to the accompanying drawings in which:-

Figure 1 shows in cross section an optical fibre submarine cable in accordance with an embodiment of the present invention;

Figure 2 shows somewhat schematically part of the manufacturing process for making the cable of Figure 1;

Figure 3 shows in detail the optical fibre package;

Figures 4, 5 and 6 show somewhat schematically stages in the formation of part of the cable of Fig. 1; and

Figure 7 shows somewhat schematically another part of the manufacturing process for making the cable of Fig.1.

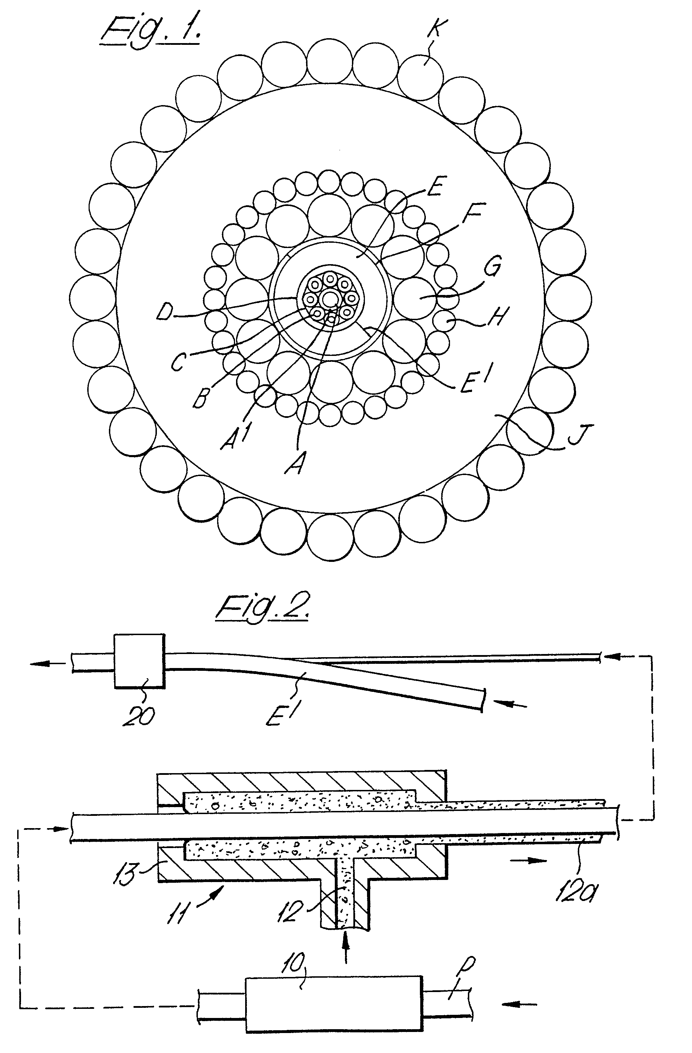

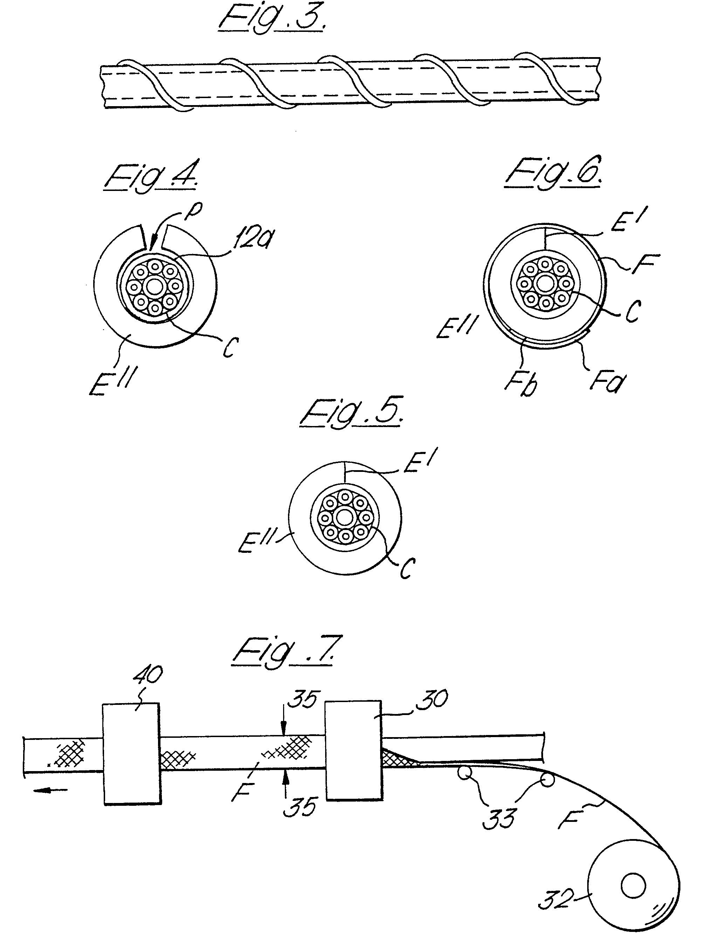

Referring to Figure 1 the cable comprises an optical fibre package at the centre consisting of a package strength member A made of high tensile steel wire which may, if desired, be copper plated to improve its electrical conductivity, and coated with a plastics coating $A_1$, preferably Nylon. Around the package strength member A are eight single mode secondary coated optical fibres B which are held in a package with the strength member A by means of a fibre package whipping C. We prefer a fibrous Kevlar ribbon which in the particular embodiment described has about 200 denier.

The fibre package is loosely housed in a tubular core E which in this embodiment is an aluminium tube of C-shaped cross section throughout its length which is subsequently closed. The tubular metallic core E has a single split $E_1$ whereby the optical fibre package is introduced into the core before the tubular member is closed to form the rigid tubular core.

The optical fibre package and the annular gap between the fibre package and the internal bore of the tubular member E, are impregnated and filled respectively with a water blocking compound. We prefer to use a polybutane material, in particular one sold under the tradename HYVIS 2000, available from B.P.Chemicals. The main function of this water blocking compound is to substantially restrict longitudinal infiltration of water along the core should the cable become damaged. Alternatively an epoxy could be used which forms a rigid adhesive.

Around the core member E is a laminate sealing strip F. This is a heat sealable plastics tape, e.g. Ethyl Acrilic material bonded to both sides of a thin aluminium tape. This strip has its edges abutting at a position diametrically opposed to the split $E_1$ and the tape is heat sealed to the outside of the core member E to form an hermetic seal around the tubular core E. The laminate tape provides additional wall thickness to the closed aluminium tube E. The pressure resistance of the combined structure is therefore increased over that for the tube E alone. However the laminate tape is an optional item and can in some circumstances be omitted.

Around the tubular core E are applied two layers of tensile strength elements for the cable, G and H respectively. The first layer G comprises between ten and twenty high tensile steel wires whose size is chosen in conjunction with the outer diameter of the core E, to be radially supported by the core and to bridge against one another so that in conjunction with the outer layer of wires H and the central tubular core E, there is formed a crush-resistant electrically conductive tensile strength member which provides the tensile strength the cable is required to have, which for submarine cables could be of the order of 18 tons breaking strength and also is crush-resistant so that the fibres loosely held in the central bore of the tubular member are substantially free of compressive stresses in use of the cable. In the preferred embodiment the inner layer comprises twelve wires.

The outer layer of strength member wires H are smaller in size than the inner layer and contain between twentyfive and fourty wires. In the particular embodiment described the outer layer contains thirty-two wires.

The outer layer of tensile strength wires can be protected against corrosion, prior to applying the dielectric, by applying a copper flash or preferably a copper "ply" to the individual wires or galvanising the individual wires before laying up the wires, to give a thickness of 1 thou to 3 thou protection. Alternatively an aluminium foil longitudinally applied and wrapped and sealed over the outside layer of tensile strength crush wires can give similar corrosion protection, prior to application of the dielectric.

Extruded around the outside of and directly onto the outer layer of strength member wires is a polyethylene sheath J which forms an electrical insulation between the outside and any electric power or electric signal which is, in use of the cable, transmitted along the conductive central core E.

The two layers of strength members are torsionally balanced, that is to say the lay of the inner layer of strength elements is opposite to that of the outer layer of strength elements, and when the cable is under load there will be no tendency for the cable to twist.

One or more armouring layers K can be applied to the outside of the insulation J.

The cable is manufactured in the following way. Referring to Figure 3 the optical fibre package P comprises eight optical fibres B with a central package strength member A bound with a Kevlar 200 denier ribbon C. The ribbon C is as shown fairly small in diameter, of the same order as one of the optical fibres, and the angle of wrap of the ribbon is such as to leave large gaps between adjacent turns of the ribbon so that a water blocking compound can easily impregnate the interstices between the optical fibres and the strength member A.

The optical fibre package P is stored on a drum and in making the cable it is drawn from the drum firstly through an electric heater 10 (Fig.2) prior to entering a

- 6 -                                    0088519

coating and impregnating station 11 where a water blocking compound (Hyvis) 12 is forced into an extruding head 13. The package P becomes impregnated and coated with the water blocking compound and the pre-heating of the package, the temperature of the head 13 and the pressure of extrusion are adjusted so that a predetermined coating thickness 12a is achieved.

The coated and impregnated package then proceeds to the next station 20 where it enters a "C"-section aluminium tube E' which is drawn from a storage drum. The "C"-section tube E' has an opening just large enough to accept the coated package at the station 20 and the configuration just ahead of the station 20 is illustrated in cross-section in Figure 4.

The station 20 comprises a series of closure dies which act to close the "C"-section tube over the package so that the closed tube E" emerges from station 20, and now has the configuration shown in Figure 5.

The annular gap between the package P and the internal bore of the closed tube E" is completely filled by the coating 12a of water blocking compound; in fact the dimensions are such that the bore of the tube E" is slightly overfilled so that a small excess of compound is removed from the tube by the closure dies at 20 and the compound serves to lubricate the tube as it passes throught the dies.

From station 20 the closed tube E" travels to a laminate application station 30 where a polyethelene/aluminium/polyethylene laminate strip F is drawn from a drum or reel 32 over rollers 33 into the station 30 where it is longitudinally folded about the tube E" so that the edges Fa and Fb abut another on the side of the tube E" which is diametrically opposite the closed split $E_1$. The tube E" with the surrounding strip then passes through a heater 40 which heat-seals the strip to the surface of the alluminium tube.

In between stations 30 and 40 is a cleaning station 35 which cleans the outer surface of the tube E" in preparation for heat-sealing the strip to it.

From the station 40 the hermetically sealed tube is passed through conventional wire wrapping machines to apply high tensile steel strength element layers G and H as previously described, followed by an extrusion process for extruding the dielectric sheath J.

For some applications the sheath 3 may not be required. For example an overhead power conductor or earth line could be constructed in this manner and would not require any plastics dielectric material.

The combination of the water blocking compound within the closed "C"-section tube and the application of the metal/plastic laminate strip to seal the outside of the tube provide an effective hermetic protection for the optical fibres within the cable. Furthermore the strip acts as a bedding layer between the tube and the strength member which aids flexibility of the cable and enables the bridging effect of the strength members to be more easily achieved by making tolerances less critical. The thickness of the strip is between 250 micrometre and 300 micrometre.

The overall diameter of the cable of Fig. 1 (without armouring) is about 2.5 cms. The aluminium core E has a closed outer diamter of about 0.7 cms and has a wall thickness which is substantially greater than the diameter of any of the optical fibres B and of the order of 1.5 mm. The optical fibre package is a loose fit in the bore of the core with a radial gap of about one tenth the diameter of the package.

We have found that the construction of core using an aluminium tube surrounded by the torsionally balanced tensile strength elements of the sizes described provides an effective crush-resistant power conducting core which is flexible yet does not tend to twist under load. When a cable is laid in deep waters there are enormous tensile loads set up in the cable and very high hydrostatic pressures. If the cable is laid on the sea bed with a net torsional stress then there may be a tendency for the cable to curl up into a loop as the tensile load relaxes. The structure described will not have that tendency. Furthermore we have found that the torsionally balanced design minimises the risk of the core stretching in use and then placing a longitudinal strain on the fibre package.

- 9 -    0088519

CLAIMS

1. An optical fibre cable comprising at least one optical fibre housed within a tubular metallic core member, at least two layers of tensile strength elements laid up around the core and forming the tensile strength member of the cable the two layers of strength elements having opposite directions of lay and being tortionally balanced.

2. A cable as claimed in claim 1, wherein the inner layer of strength elements has between ten and twenty tensile strength elements and the next layer of strength members has between twentyfive and forty strength members, the inner and outer layers engaging each other and forming a bridge around the central core.

3. An optical fibre cable comprising at least one optical fibre loosely housed within a tubular metallic core member, at least two layers of tensile strength elements laid up around the core and forming the tensile strength member of the cable, and an hermetic sealing layer between the core and the strength member to prevent moisture ingress to the core.

4. A cable as claimed in claim 3, comprising an hermetic sealing layer between the core and the strength member to prevent moisture ingress to the core.

5. A cable as claimed in any preceding claim, comprising a water blocking compound radially filling the space between the or each optical fibre and the internal bore of the core member.

6. A cable as claimed in claim 5, wherein the water blocking compound is a viscous, jelly-like material.

7. A cable as claimed in any preceding claim comprising a plurality of optical fibres held in a package with an optical fibre strength member by a widely-spaced whipping.

8.    A cable as claimed in claim 1, 2 or 4 or any claim appended thereto, wherein the hermetic sealing layer comprises a plastic/metal laminate strip sealed around the core member.

9.    A method of making an optical fibre cable comprising loosely housing at least one optical fibre within a tubular conductor, applying a first layer of tensile strength elements around the tube with a first direction of lay, applying a second layer of tensile strength elements around the first layer with an opposite direction of lay and of a size which is smaller than the first layer such that the two layers are tortionally balanced and provide with the tubular conductor a crush-resistant hollow core.

10.    A method as claimed in claim 9, wherein there are a plurality of optical fibres held in a package with a tensile strength member by a widely-spaced whipping, the method including coating and impregnating the optical fibre package with a viscous water-blocking material just prior to housing it in the split tube so that the inside of the closed tube is longitudinally water-blocked by the material.

11.    A method as claimed in claim 9 or 10, wherein a sealing layer is formed by applying a plastics/metal laminate tape around the outside of the tube and sealing the tape to the outside of the tube.

12.    A method as claimed in claim 11, comprising extruding a sheath of electrically insulating material directly onto the outermost layer of strength elements.

13.    A method of making an optical fibre cable substantially as hereinbefore described with reference to the accompanying drawings.

14.    A cable made by a method as claimed in any of claims 9 to 13 inclusive.

0088519

Fig.1.

Fig.2.

0088519

_Fig.3._

_Fig.4._

P

12a

C

E''

_Fig.6._

E'

F

C

E''

Fb

Fa

_Fig.5._

E'

E''

C

_Fig.7._

40

35

30

35

F

33

F

32

0088519

European Patent
Office

**EUROPEAN SEARCH REPORT**

Application number

EP  83 30 0619

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | RESEARCH DISCLOSURE(2244), no. 189, January, 1980, pages 16,17, Disclosure no. 18907, Havant, GB " Optical fibre submarine cable" * Whole disclosure * | 1-6,9, 12 | G 02 B    5/16 |
| X | US-A-4 278 835   (JACKSON) * Whole document * | 1,8-6 | |
| A | GB-A-1 578 439   (BICC LTD) * Page 3, lines 110-128; figures 2,3 * | 7 | |
| A | FR-A-2 435 051   (G. COMTE) * Page 4, lines 3-28; figure 1 * | 8,11 | |
| A | FR-A-2 468 136   (C. STANLEY et al.) * Page 2, lines 37-40; page 3, lines 1-30; figures 1-3 * | 9 | TECHNICAL FIELDS SEARCHED (Int. Cl. 3)   G 02 B    5/00 |
| A | GB-A-1 583 520   (J. EDWARD) * page 1, lines 19-36,48-88; page 2, lines 9-33; figures 1,2 * | 10 | |
| P,X | GB-A-2 088 583   (P. DEY) * Page 3, lines 55-110; figures 1,2 * | 1,5,9, 10 | |

The present search report has been drawn up for all claims

| Place of search THE HAGUE | Date of completion of the search 26-05-1983 | Examiner DELANGUE P.C.J.G. |
|---|---|---|